Europäisches Patentamt

European Patent Office

Office européen des brevets

(11) Veröffentlichungsnummer: **0 083 047**
**B1**

(12) **EUROPÄISCHE PATENTSCHRIFT**

(45) Veröffentlichungstag der Patentschrift:
04.02.87

(21) Anmeldenummer: **82111778.5**

(22) Anmeldetag: **18.12.82**

(51) Int. Cl.⁴: **G 01 B 7/28,** G 01 M 11/08,
G 01 M 13/00

(54) Prüfverfahren für technische Funktionsteile und Vorrichtung zur Durchführung des Verfahrens.

(30) Priorität: **24.12.81 DE 3151265**
**05.11.82 DE 3240948**

(43) Veröffentlichungstag der Anmeldung:
**06.07.83 Patentblatt 83/27**

(45) Bekanntmachung des Hinweises auf die Patenterteilung:
**04.02.87 Patentblatt 87/6**

(84) Benannte Vertragsstaaten:
**AT CH FR GB IT LI SE**

(56) Entgegenhaltungen:
**DE-A-2 513 389**
**DE-A-3 111 728**
**US-A-3 504 279**
**US-A-4 125 943**

(73) Patentinhaber: **BAYERISCHE MOTOREN WERKE Aktiengesellschaft, Postfach 40 02 40 Petuelring 130, D-8000 München 40 (DE)**

(72) Erfinder: **Kolitsch, Jörg, Dipl.- Ing., Georgenstrasse 102, D-8000 München 40 (DE)**
Erfinder: **Miehle, August, Ing.- grad., Arnrieder Strasse 6, D-8000 München 70 (DE)**

(74) Vertreter: **Bullwein, Fritz, Bayerische Motoren Werke Aktiengesellschaft Postfach 40 02 40 Petuelring 130 AJ- 33, D-8000 München 40 (DE)**

## Beschreibung

Die Erfindung bezieht sich auf ein Verfahren und eine Vorrichtung zur Prüfung von Drehlageänderungen technischer Funktionsteile, die relativ zu ihrer Ausgangslage drehbar sind.

Es ist ein Verfahren zur Güteprüfung und Ausschußanzeige beim Anziehen von Schraubverbindungen bekannt, bei der die Augenblickswerte von Drehmoment und Drehwinkel in einer Anzahl von Punkten während des Anziehvorgangs bestimmt und mit vorgegebenen Drehmoment-Drehwinkel-Grenzwerten verglichen werden. Bei Überschreiten dieser Grenzwerte werden Anzeigesignale erzeugt (DE-A- 28 43 810). Mit Hilfe des bekannten Verfahrens ist es nicht möglich, eine Aussage über die Festigkeit der Schraubenverbindung nach Beendigung des Anziehvorgangs zu erhalten.

Der Erfindung liegt die Aufgabe zugrunde, ein Verfahren und eine Vorrichtung zur Drehlageprüfung technischer Funktionsteile zu schaffen, das mit einfachen Mitteln eine Aussage über die Lage bzw. Lageänderung des Funktionsteils ermöglicht.

Die Erfindung löst diese Aufgabe dadurch, daß ein durch Relativbewegung gegenüber einer Sensoreinrichtung erzeugtes Abbild des Funktionsteiles mit einen entsprechenden früheren, gespeicherten Abbild verglichen wird und daß entsprechend der Übereinstimmung bzw. den Unterschieden der beiden Abbilder eine Warnanzeige ausgelöst wird.

Eine Vorrichtung zur Durchführung des Verfahrens ist im Anspruch 8 beschrieben.

Der Grundgedanke der Erfindung besteht darin aus dem Vergleich der Abbilder eines technischen Funktionsteils zu einem früheren und zum jetzigen Zeitpunkt einen Schluß auf die Bewegung oder Konturveränderung des Funktionsteils in der Zwischenzeit zu ziehen und daraus ggf. eine Warnanzeige abzuleiten. Anwendungsmöglichkeiten sind beispielsweise die Zahnräder von Kettentrieben zum Überprüfen beispielsweise des Verschleißes an den Zähnen, von Turbinenschaufeln zum Feststellen des Herauswanderns der Schaufeln durch Fliehkräfte oder von Verbiegungen durch Kavitation, von Wälzlager-Käfigen, weiter von automatischen Förderanlagen in Berg- und Tagebau, ferner der Verschleiß von Bohr- und Schneidwerkzeugen oder die Überprüfung von Stösselantrieben bei Werkzeugmaschinen bzw. von Nockenwellen.

Der Vergleich der beiden Abbilder des Teiles ermöglicht entsprechend der Auflösegenauigkeit der Sensor- und der Vergleichseinrichtung eine Änderung der Drehlage dieses Teils zu erkennen und kann eine Warnanzeige bereits dann liefern, wenn diese Änderung, beispielsweise für das menschliche Auge, noch nicht erkennbar ist. Andererseits deutet das Fehlen einer Warnanzeige beispielsweise im Falle einer Schraubenverbindung auf eine hohe Güte der Schraubenverbindung bzw. allgemein auf eine hohe Lagestabilität hin.

Die Durchführung des Prüfverfahrens kann in verschiedener Weise erfolgen. So kann das Abbild in zeitlich gleichen Abständen erzeugt werden. Nach Vergleich kann es statt des vorhergehenden Abbilds gespeichert werden. Das frühere, gespeicherte Abbild wird dadurch stets aktualisiert. Sofern die Warnanzeige bei ihrem Auftreten nicht sofort benutzt wird, um das Teil in die gewünschte ursprüngliche Lage zu bringen, kann aus der Anzahl der Warnanzeigen dann auf das Lageverhälten des Teiles geschlossen werden. Ein alternatives Prüfverfahren, bei den für den Vergleich stets das ursprüngliche Abbild des Teiles zugrundegelegt wird, ermöglicht aus der Anzahl der Warnanzeigen eine Aussage darüber wann ein Lagefehler des Teiles aufgetreten ist.

Auch für die Aufnahme der Abbilder bieten sich verschiedene Möglichkeiten an. Gegenüber einer Bewegung des Sensors an dem feststehenden Teil vorbei bietet der umgekehrte Bewegungsablauf Vorteile gerade bei der Untersuchung von rotierenden Teilen. Beispielsweise kann eine derartige feststehende Sensoreinrichtung auch nachträglich mit geringem Aufwand angeordnet werden.

Auch die Arbeitsweise der Sensoreinrichtung kann auf unterschiedlichen Prinzipien beruhen. So können die Abbilder für ein metallisches Teil induktiv erzeugt werden. Als Sensoreinrichtung dient dabei beispielsweise eine einfache Spule, in der durch das Teil ein über und unter einem Mittelwert liegende Spannungssignal erzeugt wird.

Alternativ dazu können die Abbilder beispielsweise auch optisch oder akustisch erzeugt werden. Die Wellenlänge der von der Sensoreinrichtung ausgesandten optischen bzw. akustischen Signale kann dabei außerhalb des sicht- bzw. hörbaren Bereichs liegen. In beiden Fällen kann beispielsweise das Reflexverhalten des Teiles oder der Abstand von der Sensoreinrichtung bestimmt werden.

Eine Vorrichtung, die mit einfachen Mitteln die Durchführung des erfindungsgemäßen Verfahrens ermöglicht, enthält einen einzigen Sensor als Sensoreinrichtung, der mit einen Speicher verbunden ist.

Die Erfindung ist anhand der Zeichnung näher erläutert. Dabei zeigen

Fig. 1 die Gewinnung eines induktiven Abbilds eines Teils einer Schraubenverbindung,

Fig. 2 eine Prüfvorrichtung, mit der derartige Abbilder bei Schraubenverbindungen an einem rotierenden Teil gewonnen und für eine Warnanzeige verwendet werden,

Fig. 3 eine Prüfvorrichtung, durch die der Zahnkranz der Schwungscheibe eines Kraftfahrzeugs überwacht werden kann und

Fig. 4 die beispielsweise induktiv gewonnenen Abbilder des Zahnkranzes von Fig. 3 vor und nach einer vorgegebenen Betriebsdauer.

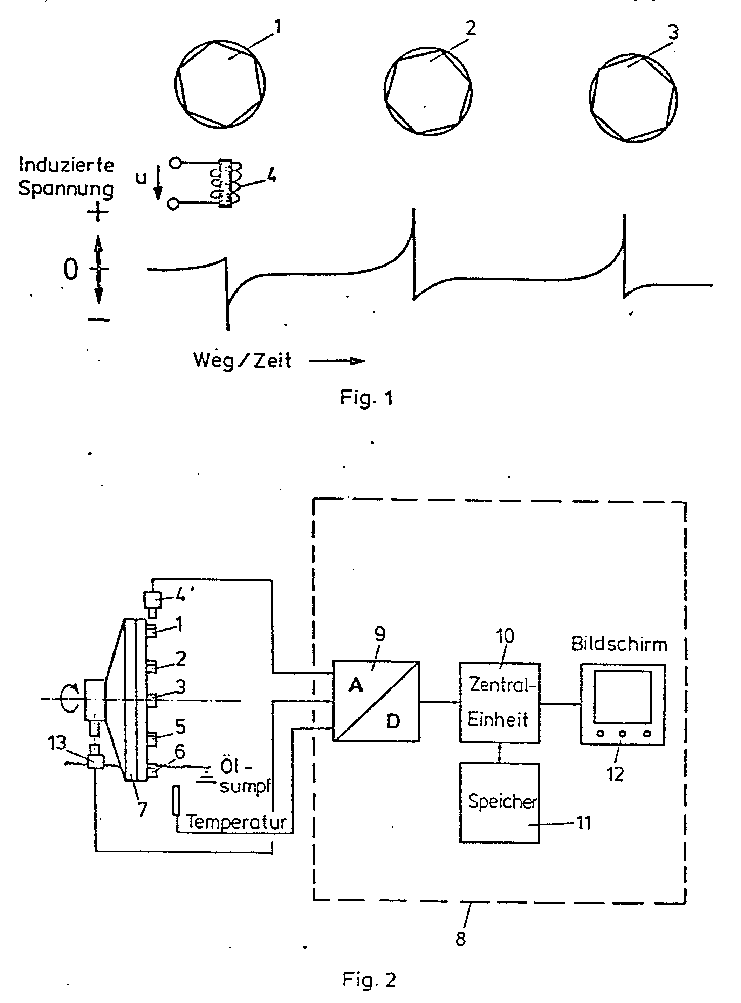

Fig. 1 zeigt die induktiven Abbilder dreier Schraubenköpfe 1 bis 3, die bei Vorbeil auf bei einer schematisch als Spule 4 ausgebildetem Induktivgeber erzeugt werden. Das Abbild entspricht der in der Spule 4 induzierten Spannung und ist in der Zuordnung zu den Schraubenköpfen 1 bis 3 dargestellt. Deutlich ist zu erkennen, daß die durch die der Spule 4 am nächsten gelegene Ecke der Schraubenköpfe bis 3 hervorgerufene Spannungsspitze umso größer ist, je näher diese Ecke von der Spule 4 entfernt ist.

Das Abstiegs- und Abfallsverhalten der Spannung und die Amplitude und Lage der Spannungsspitzen relativ zu den entsprechenden Werten für die anderen Schraubenköpfe ermöglichen eine eindeutige Aussage über die Drehlage der Schraubenköpfe 1 bis 3 sogar direkt in Winkelgraden. Bei einer Verdrehung eines Schraubenkopfes ändert sich auch das charakteristische Abbild. Diese Änderung wird mit einer Vorrichtung, wie sie in Fig. 2 schematisch dargestellt ist, zum Auslösen einer Warnanzeige benutzt.

Die Vorrichtung ermöglicht beispielsweise die Prüfung von Schraubenverbindungen am Tellerrad eines Hinterachsgetriebes von Kraftfahrzeugen. Sie besteht aus einem Induktivgeber 4' entsprechend der Spule 4 von Fig. 1, die feststehend in der Nähe der Schraubenköpfe 1 bis 3 und 5 und 6 des Tellerrads 7 angeordnet ist. Der Induktivgeber 4' ist mit einem Analogdatenerfassungssysten 8 verbunden, das einen Analog-Digital-Wandler 9, eine Zentraleinheit 10, einen Speicher 11 und einen Bildschirm 12 enthält.

Der Wandler 9 digitalisiert die entsprechend Fig. 1 vom Induktivgeber 4' gelieferten Abbilder der Schraubenköpfe und gibt sie an die Zentraleinheit 10 weiter. Zu Beginn der Prüfung gibt die Zentraleinheit 10 diese digitalisierten Abbilder der Schraubenköpfe in den Speicher 11 ein. In zeitlich regelmäßigen Abständen werden nun die Abbilder der am Tellerrad vorhandenen Schraubenköpfe bei einer vollständigen Umdrehung des Tellerrads 7 aufgenommen. Mit Hilfe einer Triggereinrichtung 13 wird dabei sichergestellt, daß die Reihenfolge dieser Abbilder stets gleich ist. Die Zentraleinheit 10 erhält nun diese aktuellen Abbilder der Schraubenköpfe und vergleicht sie mit den im Speicher 11 enthaltenen entsprechenden früheren Abbildern. Bei fehlender Übereinstimmung eines oder mehrerer dieser Abbilder mit dem entsprechenden gespeicherten Abbild gibt die Zentraleinheit 10 auf den Bildschirm 12 eine Warnanzeige, beispielsweise in Form der Nummer der gelockerten Schraubenverbindungen aus.

Die Erfindung erlaubt eine kontinuierliche Überwachung von Schraubenverbindungen für Untersuchungen hinsichtlich der Betriebsfestigkeit oder zur Schadensverhütung in Maschinen und Anlagen. Sie ermöglicht ein Verdrehen der Schrauben schon bei geringen Winkelgraden zu erkennen und hilft unnötige Reparatur- und Stillständszeiten für Wartungsarbeiten sowie damit verbundene Sicherheitsrisiken zu vermeiden. Die entsprechende Vorrichtung arbeitet berührungslos. Da der Sensor feststehend montiert werden kann, ist keine Signalübertragung von Sensor aus (z. B. Schleifringübertrager) notwebdig. Die Erfindung kann überall dort angewendet werden, wo Schraubenverbindungen an rotatorisch oder translatorisch bewegten Teilen ein Sicherheitsrisiko oder Ausfallrisiko darstellen, z. B. neben der Abwendung bei einem Kraftfahrzeug bei Turbinen in Kraftwerken und Flugzeugtriebwerken. Die Warnanzeige kann auch in der Weise erfolgen, daß die Maschine oder Anlage bei Auftreten einer zu großen Drehlagenänderung des überwachten Schrauben-(Sicherungs-)Teiles zwangsweise stillgesetzt wird.

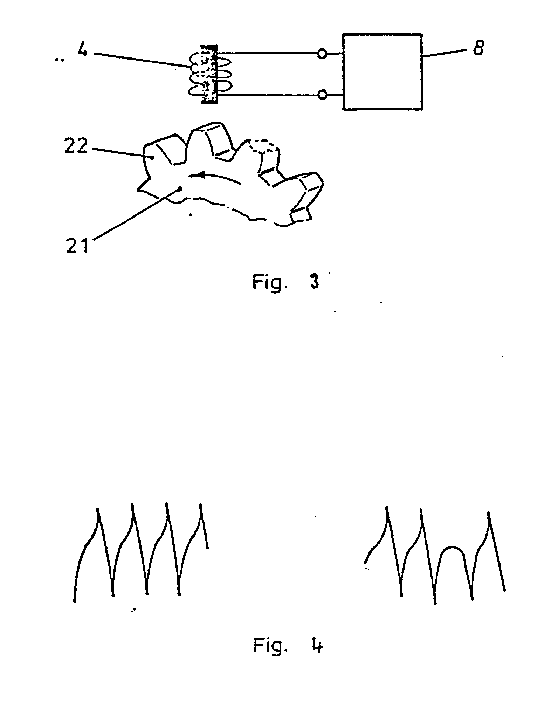

Die in Fig. 3 ausschnittsweise gezeigte Schwungscheibe 21 eines Kraftfahrzeugs trägt an seinem Umfang in gleichmäßigen Abständen Zähne 22, in die ein nicht dargestelltes Ritzel eines Anlassermotors eingreift. Mit Hilfe eines schematisch als Spule 4 ausgebildeten Induktivgebers, der feststehend ist, wird bei Umdrehung der Schwungsscheibe 21 ein Abbild der Zähne 22 gewonnen. Dieses Abbild ist im oberen Teil von Fig. 2 beispielsweise für den neuwertigen Zustand der Schwungscheibe 21 und der Zähne 22 gezeigt. Nach einer vorgegebenen Betriebszeit erfolgt eine erneute Aufnahme der Abbilder der Zähne 22. In Fig. 3 ist eine in der Zwischenzeit aufgetretene Beschädigung eines der Zähne 22, beispielsweise durch unsachgemäßes Einspuren des Anlasserritzels, strichliert eingezeichnet. Das mit Hilfe der Spule 4 gewonnene Abbild, das im unteren Teil von Fig. 4 dargestellt ist, unterscheidet sich gegenüber den früheren Abbild an der Stelle, die den beschädigten Zahn 22 entspricht. Mit Hilfe eines Analogdatenerfassungssystems 8 kann unter Vergleich der beiden in Fig. 4 wiedergegebenen Abbilder festgestellt werden, daß der eine Zahn 22 defekt ist und welches Ausmaß dieser Defekt besitzt. Letzteres ergibt sich in erster Häherung aus dem Vergleich der Amplituden der enstprechenden Ausgangssignale der Spule 4 in den beiden Abbildern für den beschädigten Zahn 22.

Überschreitet der festgestellte Defekt oder die Zahl der defekten Zähne ein vorgegebenes Maß, so kann eine Warnanzeige ausgelöst werden.

**Patentansprüche**

1. Verfahren zur Prüfung von Drehlageänderungen technische Funktionsteile, die relativ zu ihrer Ausgangslage veränderlich sind, dadurch gekennzeichnet, daß ein durch Relativbewegung gegenüber einer Sensoreinrichtung (4, 4') erzeugtes Abbild des Funktionsteiles mit einem entsprechenden früheren, gespeicherten Abbild verglichen wird und daß entsprechend der Übereinstimmung bzw. den Unterschieden der beiden Abbilder eine Warnanzeige ausgelöst wird.

2. Verfahren nach Anspruch 1, dadurch gekennzeichnet, daß das Abbild in zeitlich gleichen Abständen erzeugt wird.

3. Verfahren nach Anspruch 1 oder 2, dadurch gekennzeichnet, daß das Funktionsteil an der feststehenden Sensoreinrichtung (4, 4') vorbei bewegt wird.

4. Verfahren nach Anspruch 1, 2 oder 3, dadurch gekennzeichnet, daß die Abbilder induktiv erzeugt werden.

5. Verfahren nach Anspruch 1, 2, oder 3, dadurch gekennzeichnet, daß die Abbilder optisch oder akustisch erzeugt werden.

6. Verfahren nach Anspruch 5, dadurch gekennzeichnet, daß das Reflexionsverhalten des Funktionsteiles bestimmt wird.

7. Verfahren nach Anspruch 4 oder 5, dadurch gekennzeichnet, daß der Abstand des Funktionsteiles von der Sensoreinrichtung bestimmt wird.

8. Vorrichtung zur Prüfung von Drehlage änderungen technisches Funktionsteile, die relativ zu ihrer Ausgangslage drehbar sind, zur Durchführung des Verfahrens nach einem der Ansprüche 1 bis 7, gekennzeichnet durch einen einzigen Sensor (4, 4') als Sensoreinrichtung, der mit einem Speicher (11) verbunden ist.

## Claims

1. A method of examining changes in rotational position of technical functional parts which are rotatable with respect to their initial position, characterised in that an image of the functional part (head 1 to 3, 5, 6, teeth 22) generated by its movement with respect to a sensor device (4, 4') is compared with a corresponding earlier-stored image and that, according to the conformity or discrepancy of the two images, a warning indication is triggered.

2. A method according to Claim 1, characterised in that the image is generated at chronologically equal intervals.

3. A method according to Claim 1 or 2, characterised in that the functional part is moved past the stationary sensor device (4, 4').

4. A method according to Claim 1, 2 or 3, characterised in that the images are generated inductively.

5. A method according to Claim 1, 2, or 3 characterised in that the images are generated optically or acoustically.

6. A method according to Claim 5, characterised in that the reflection behaviour of the functional part is determined.

7. A method according to Claim 4 or 5, characterised in that the distance of the functional part from the sensor device is determined.

8. Apparatus for examining changes in rotational position of technical functional parts which are rotatable with respect to their initial position, for carrying out the method according to any one of Claims 1 to 7, characterised by a single sensor (4, 4') as sensor device which is connected with a store (11).

## Revendications

1. Procédé de contrôle de modifications de la position de rotation de pièces techniques fonctionnelles qui peuvent tourner par rapport à la position de départ, caractérisé en ce que l'on compare une image de la pièce fonctionnelle (tête 1 à 3, 5, 6, dent 22) produite par un mouvement relatif en face d'un dispositif de détecteur (4,4') avec une image antérieure correspondante, mémorisée; et en ce que l'on déclenche une alarme en fonction de la coincidence ou de la différence des deux images.

2. Procédé selon la revendication 1, caractérisé en ce que l'image est produite à intervalles égaux dans le temps.

3. Procédé selon la revendication 1 ou 2, caractérisé en ce que la pièce fonctionnelle passe devant le dispositif de détecteur fixe (4, 4').

4. Procédé selon la revendication 1,2 ou 3, caractérisé en que les images sont produites par voie inductive.

5. Procédé selon la revendication 1, 2 ou 3, caractérisé en ce que les images sont produites par voie optique ou acoustique.

6. Procédé selon la revendication 5, caractérisé en ce que l'on détermine le comportement en réflexion de la pièce fonctionnelle.

7. Procédé selon la revendication 4 ou 5, caractérisé en l'on détermine la distance de la pièce fonctionnelle au dispositif de détection.

8. Dispositif de contrôle des modifications de la position de rotation de pièces techniques fonctionnelles qui peuvent tourner par rapport à leur position de départ, pour l'exécution du procédé selon l'une des revendications 1 à 7, caractérisé par un unique détecteur (4, 4'), relié à une mémoire (11), comme dispositif de détection.

0 083 047

Induzierte Spannung

Weg/Zeit ⟶

Fig. 1

Bildschirm

A / D  9

Zentral-Einheit  10

Speicher  11

12

Öl-sumpf

Temperatur

Fig. 2

1

Fig. 3

Fig. 4